(19) Europäisches Patentamt
European Patent Office
Office européen des brevets

(11) EP 0 408 540 B1

(12) EUROPÄISCHE PATENTSCHRIFT

(45) Veröffentlichungstag und Bekanntmachung des Hinweises auf die Patenterteilung:
**16.10.1996 Patentblatt 1996/42**

(51) Int Cl.[6]: **C08G 73/10**, C08G 18/34, C08G 18/22

(21) Anmeldenummer: **90890203.4**

(22) Anmeldetag: **05.07.1990**

# (54) Mischpolyimide sowie Verfahren zu ihrer Herstellung

Mixed polyimides and process for preparing them

Polyimides mixtes et procédé pour leur préparation

(84) Benannte Vertragsstaaten:
**AT BE CH DE DK ES FR GB IT LI LU NL SE**

(30) Priorität: **13.07.1989 AT 1700/89**

(43) Veröffentlichungstag der Anmeldung:
**16.01.1991 Patentblatt 1991/03**

(73) Patentinhaber: **IMI-Tech Fibres GmbH**
**4860 Lenzing (AT)**

(72) Erfinder:
- **Seidl, Sigrid, Dr.**
  **AT-4863 Seewalchen (AT)**
- **Weinrotter, Klaus, Dr.**
  **AT-4840 Vöcklabruck (AT)**
- **Simharl, Reinhold**
  **AT-4860 Lenzing (AT)**

(74) Vertreter: **Schwarz, Albin, Dr. Kopecky & Schwarz**
**Patentanwälte**
**Wipplingerstrasse 32/22**
**1010 Wien (AT)**

(56) Entgegenhaltungen:
**EP-A- 0 092 486**
**EP-A- 0 242 815**
**DE-A- 1 962 588**
**JP-A-52 025 173**
**US-A- 3 701 756**
**US-A- 4 001 186**
**US-A- 4 177 333**

EP 0 408 540 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft Mischpolyimide mit Struktureinheiten der allgemeinen Formeln

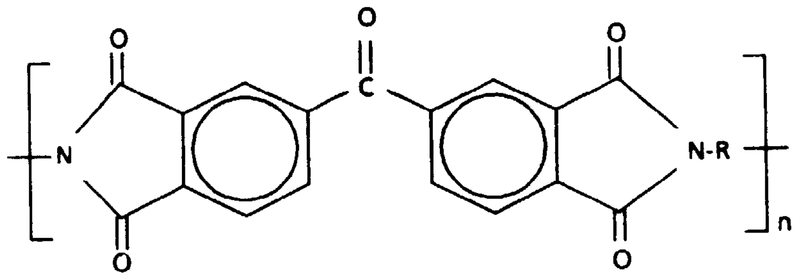

, (I)

und

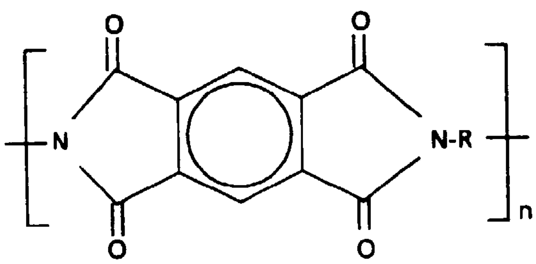

, (II)

worin n eine ganze Zahl größer 1 ist und R einen zweibindigen aromatischen Rest darstellt, sowie ein Verfahren zu ihrer Herstellung.

Aromatische Polyimide sind aufgrund ihrer außerordentlich großen Hitzebeständigkeit, ihrer Chemikalienresistenz und ihrer Schwerentflammbarkeit begehrte Werkstoffe.

Allerdings steht der Verarbeitung der Rohpolymeren meist entgegen, daß sie nicht schmelzbar sind und infolge der starken Wechselwirkungskräfte zwischen den Molekülketten auch nicht in organischen Lösungsmitteln gelöst werden können.

Es wurde versucht, dieses Problem zu umgehen, indem das gewünschte Polyimid über eine Zweistufensynthese aus Polycarbonsäureanhydriden und aromatischen Aminen zunächst nur zur Polyamidcarbonsäure kondensiert wird. Diese Polyamidcarbonsäuren sind in organischen Lösungsmitteln leicht löslich und können daher auf einfache Weise zu Folien, Fasern und anderen Formkörpern weiterverarbeitet werden. Die Dehydratisierung der Polyamidcarbonsäure zum Polyimid wird meist erst danach, z.B. durch Erhitzen, durchgeführt.

Dieser Weg hat jedoch den schwerwiegenden Nachteil, daß bei der Aushärtung zum Polyimid nochmals Wasser freigesetzt wird, worunter die Qualität des Endproduktes leidet.

Ein ähnliches Verfahren ist aus der EP-A2 - 0 242 815 bekannt, nach dem Polyimide mit den eingangs genannten Struktureinheiten aus Benzophenon-3,3′,4,4′-tetracarbonsäuredianhydrid (BTDA), Pyromellithsäuredianhydrid (PMDA) und 9,9′-Bis(4-aminophenyl)fluoren hergestellt werden, indem die Reaktionsmischung zunächst zwei Stunden bei 40°C gerührt wird, um eine homogene Lösung zu erhalten, die dann auf 150°C erhitzt und weitere zwei Stunden gerührt wird. Danach wird bei einer Temperatur von 190°C das bei der Imidisierung sich bildende Wasser abdestilliert, was weitere zwei Stunden in Anspruch nimmt.

Die entstehenden Polyimide besitzen zwar eine gewisse Löslichkeit in organischen Lösungsmitteln, wie Dimethylacetamid, N-Methylpyrrolidon oder Methylendichlorid, trotzdem muß aber als Reaktionsmedium das teure und schwer zu handhabende m-Kresol verwendet werden. Ein weiterer Nachteil dieses Verfahrens besteht in der langwierigen Reaktionsführung.

Die gleichen Nachteile weist das Verfahren gemäß der DE-A - 19 62 588 auf, nach dem u.a. Mischpolyimide aus BTDA, PMDA, 2,4-Aminotoluol und 4,4′-Diaminodiphenylpropan gebildet werden.

In der CA-A - 1,240,438 werden aromatische Polyimide beschrieben, die aus BTDA oder PMDA und aromatischen Aminen in N-Methyl-pyrrolidon als Reaktionsmedium hergestellt werden können. Allerdings muß auch hier ein Dehydratisierungsschritt zum Polyimid vorgesehen werden.

Es wurde in der Vergangenheit weiters versucht, besser lösliche Polyimide in einem Einstufenverfahren aus Polycarbonsäuredianhydriden und Diisocyanaten herzustellen. Die US-A - 3,985,934 beispielsweise offenbart ein Verfahren zur Herstellung eines in DMF löslichen Mischpolyimides aus BTDA und einem Diisocyanatgemisch, bestehend aus 70 bis 90 Mol% Toluylendiisocyanat (TDI) und 10 bis 30 Mol% Methylenbis(phenylisocyanat) (MDI).

Die Vorteile eines in organischen Lösungsmitteln gut löslichen Polyimides liegen klar auf der Hand: bei der Weiterverarbeitung muß nur mehr das Lösungsmittel entfernt werden. Weiteres Erhitzen bei höheren Temperaturen zum Imidisieren und Entfernen des entstehenden Reaktionswassers ist nicht notwendig.

Die erhaltene Polyimidlösung kann z.B. direkt durch ein Trockenspinnverfahren zu hochtemperaturbeständigen, schwerentflammbaren Fäden versponnen werden (EP-A - 0 119 185). Weiters kann sie zum Herstellen von hochtemperaturbeständigen Folien und Beschichtungsmassen verwendet werden (AT-B - 387.783). Nach Ausfällen des Polyimides kann das Polyimidpulver durch Sintern oder Heißverpressen zu hochtemperaturbeständigen Formkörpern weiterverarbeitet werden (US-A - 3,708,458). Die Glasumwandlungspunkte dieser Polyimide liegen zwischen 295 und 315°C und ihr Zersetzungspunkt zwischen 520 und 560°C.

Es hat sich allerdings gezeigt, daß mit zunehmender Löslichkeit der Polyimide ihre Thermostabilität abnimmt. Dieses Phänomen ist am deutlichsten an den Abkömmlingen des aus PMDA und p-Diaminobenzol herstellbaren Polyimides zu beobachten. Die Molekülkette dieses Polyimides besteht ausschließlich aus aromatischen Resten und Imidzyklen, es ist in organischen Lösungsmitteln unlöslich und besitzt die größte Thermostabilität unter den Polyimiden. Durch den Einbau von sogenannten "Scharnieratomen" (z.B. $-CH_2-$; -CO-; $-SO_2$; -O-) in die Molekülkette wird die Löslichkeit verbessert, die Thermostabilität nimmt aber ab.

Die Erfindung stellt sich die Aufgabe, Mischpolyimide mit Struktureinheiten der eingangs genannten Art zur Verfügung zu stellen, die in polaren, aprotischen organischen Lösungsmitteln gut löslich sind und trotzdem eine hohe Thermostabilität aufweisen.

Die erfindungsgemäßen Mischpolyimide bestehen aus Struktureinheiten der allgemeinen Formeln

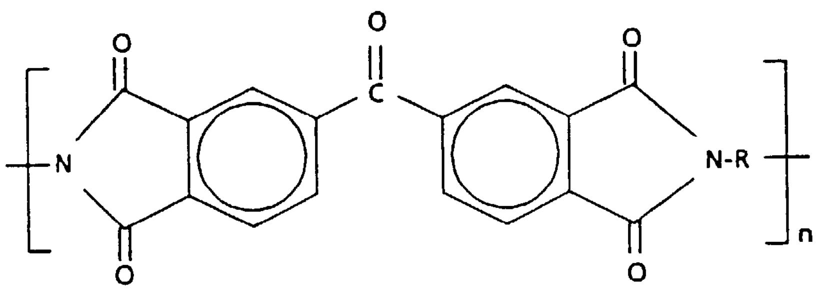 , (I)

und

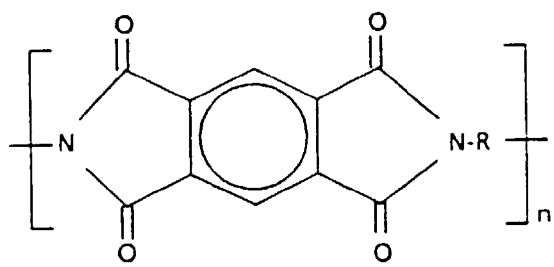 , (II)

worin n eine ganze Zahl größer 1 ist und R einen zweibindigen aromatischen Rest darstellt, wobei ausschließlich für die beiden Gruppen

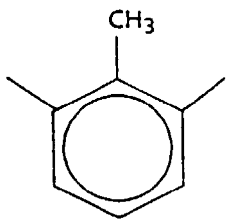 (IIIa) und 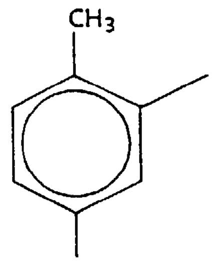 (IIIb)

und/oder die Gruppe

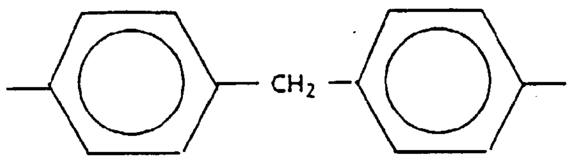 (IV)

steht, und sind herstellbar nach einem Verfahren gemäß Anspruch 4.

Die verbesserte Hochtemperaturstabilität der erfindungsgemäßen Polyimide äußert sich darin, daß sie insbesondere einen Glasumwandlungspunkt im Bereich von 330°C und 370°C aufweisen und auch schwerentflammbar sind. So wurden beispielsweise für Folien LOI-Werte ("Limited Oxygen Index", bestimmt nach ASTMD 2863) zwischen 41 und 46 % $O_2$ gemessen.

Es hat sich gezeigt, daß bei den erfindungsgemäßen Polyimiden ein eindeutiger Zusammenhang zwischen der Zusammensetzung aus den Struktureinheiten (I) und (II) und den thermischen Eigenschaften besteht. Besonders stark ausgeprägt ist dieser Zusammenhang, wenn das Molverhältnis der Struktureinheiten der allgemeinen Formel (I) zu den Struktureinheiten der allgemeinen Formel (II) im Bereich von 1:1 1 bis 99 : 1 liegt.

In diesem Bereich besteht beispielsweise eine nahezu lineare Abhängigkeit zwischen dem Glasumwandlungspunkt des Mischpolyimides und seinem Anteil an der Imidstruktureinheit (II). Je höher dieser Anteil, desto höher liegt auch der Glasumwandlungspunkt, wobei eine Erhöhung um 10 Mol% (berechnet vom Gesamtgehalt an Struktureinheiten (I) und (II)) den Glasumwandlungspunkt um fast genau 10°C erhöht (siehe Tabelle).

Diese Korrelation kann auch bei Mischpolyimiden beobachtet werden, bei denen der Rest R ausschließlich für die Gruppen (IIIa) und (IIIb), als auch noch zusätzlich für die Gruppe (IV) steht, wobei das Molverhältnis der Gruppen

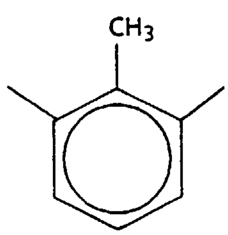 (IIIa) und 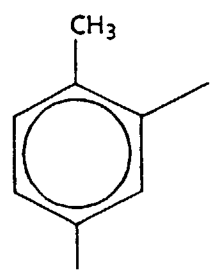 (IIIb)

zu der Gruppe

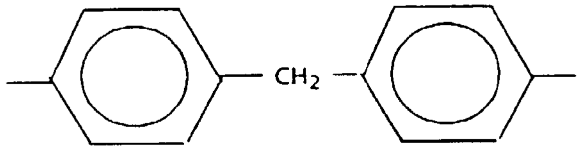

(IV)

bevorzugt mindestens 7 : 3 beträgt.

Eine bevorzugte Ausführungsform der erfindungsgemäßen Mischpolyimide enthält in der Polyimidkette den Rest (IIIb) in einer Menge zwischen 70 % bis 90 % der gesamten Toluylreste (IIIa) und (IIIb).

Wie aus der Tabelle weiters ersichtlich, besitzen Mischpolyimide, in deren Molekülketten sowohl die Gruppen (III) und (IV) eingebaut sind, einen niedrigeren Glasumwandlungspunkt als jene, die nur die Gruppe(n) (III) aufweisen. Mit den erfindungsgemäßen Polyimiden wird somit die Möglichkeit eröffnet, durch Wahl der Anteile an der Struktureinheit (II) und der Gruppe (IV) die Hitzestabilität gezielt zu steuern.

Die Erfindung betrifft auch ein Verfahren zur Herstellung der erfindungsgemäßen Mischpolyimide, das gekennzeichnet ist durch die Kombination der Maßnahmen, daß

- eine Lösung eines intramolekularen Tetracarbonsäuredianhydrid-Gemisches, bestehend aus 50 bis 99 Mol% Benzophenon-3,3',4,4'-tetracarbonsäuredianhydrid und 50 bis 1 Mol% Pyromellithsäuredianhydrid, in einem polaren aprotischen Lösungsmittel als Reaktionsmedium erwärmt und mit
- einer insgesamt äquimolaren Menge von 2,4- und 2,6- Toluylendiisocyanat und/oder Methylenbis(phenylisocyanat) versetzt wird,

wobei die Erwärmung in einem dipolaren Lösungsmittel auf Temperaturen zwischen 60°C und 150°C, vorzugsweise zwischen 70°C und 100°C erfolgt, und die Menge des Lösungsmittels mindestens so groß ist, daß zunächst sämtliche Reaktionsteilnehmer in Lösung sind.

Als Lösungsmittel kommen vor allem Dimethylformamid, Dimethylacetamid, N-Methylpyrrolidon und Dimethylsulfoxid in Frage. Die Obergrenze der Menge an verwendetem Lösungsmittel wird bevorzugt so gewählt, daß die fertige Polymerlösung einen Gehalt von 15 bis 40 Gewichtsprozent Polyimid enthält.

Die Herstellung der erfindungsgemäßen Mischpolyimide kann durch Zugabe eines Alkalimetallhydroxides, -alkoholates, -carbonates oder Phospholen-, Phospholan- oder Phosphetanderivates in einer Menge zwischen 0,0001 bis 0,1 Mol pro Mol Diisocyanat katalysiert werden. Diese Stoffe sind zum Teil bereits als Polymerisationsbeschleuniger bei anderen Kondensationsreaktionen bekannt.

Bei der Durchführung der Umsetzung wird zur Lösung der Dianhydride und des Katalysators bei 60 bis 150°C Reaktionstemperatur, bevorzugt bei 70 bis 100°C, die entsprechende Menge Diisocyanat möglichst rasch zugetropft. Das Fortschreiten der Reaktion kann beispielsweise durch IR-Spektralanalyse (Abwesenheit einer Absorption entsprechend freien NCO-Gruppen) verfolgt werden. Während der Reaktion wird $CO_2$ frei. Nach Zugabe der äquimolaren Menge Diisocyanat zeigt das Aufhören der $CO_2$-Entwicklung das Ende der Reaktion an. In der fertigen Copolyimidlösung sollen keine freien NCO- oder Anhydridgruppen mittels IR-Spektralanalyse mehr nachweisbar sein.

Nach Beendigung der Reaktion erhält man viskose Copolyimidlösungen mit einer inhärenten Viskosität (c = 0,5g/dl bei 25°C in DMF/1 % LiBr) von 30 bis 80 ml/g. Um die erhaltenen Copolyimide charakterisieren zu können, wird aus der Lösung durch Zugabe eines Fällungsmittels, wie Aceton oder Isopropanol, das entsprechende Copolyimid ausgefällt.

Die erfindungsgemäßen Mischpolyimide können auch hergestellt werden, wenn statt des Toluylendiisocyanates und gegebenenfalls des Methylenbis(phenylisocyanates) 2,4- und/oder 2,6-Toluylendiamin bzw. Methylenbis(phenylamin) eingesetzt werden.

In diesem Fall wird zu einer Lösung der Dianhydride in einem aprotisch polaren Lösungsmittel bei Temperaturen von Raumtemperatur bis 175°C das Diamin zugetropft. Die erhaltene Polyamidsäure wird danach durch Erhitzen des Reaktionsgemisches auf Temperaturen von 170 bis 220°C und Entfernen des entstehenden Wassers imidisiert. Die Imidisierung kann aber auch chemisch durch Zugabe von z.B. Acetanhydrid in Gegenwart eines tertiären Amines durchgeführt werden.

Die folgenden Beispiele sollen die Erfindung noch näher erläutern.

Beispiel 1:

In einem 1000 ml Kolben mit Rührer, Rückflußkühler, Thermometer und Stickstoffspülung wurden 145g (0,45 mol) Benzophenon-3,3′,4,4′-tetracarbonsäuredianhydrid und 10,91 g (0,05 mol) Pyromellithsäuredianhydrid und 0,2 g

(0,0037 mol) Natriummethylat in 597 g trockenem DMF gelöst. Die Reaktionsmischung wurde auf 80°C erwärmt, und unter konstantem Rühren unter Stickstoffatmosphäre wurden innerhalb von vier Stunden 87,08g (0,5 mol) Toluylendiisocyanat, bestehend zu 80 % aus 2,4- und zu 20 % aus 2,6-Isomerem, zugetropft. Die fertige Polykondensationslösung wurde danach bis zur Beendigung der $CO_2$-Entwicklung eine Stunde bei 80°C weitergerührt.

Die fertige Polykondensationslösung hatte eine inhärente Viskosität (c = 0,5 g/dl bei 25°C in DMF/1 % LiBr) von 32 ml/g. Durch Zugabe von Aceton wurde das Polyimid ausgefällt, der Niederschlag abfiltriert, gewaschen und getrocknet. Die Glasübergangstemperatur des Pulvers lag bei 340°C.

Beispiele 2 bis 8:

Sieben weitere Copolyimide wurden nach der in Beispiel 1 beschriebenen Arbeitsvorschrift hergestellt. Die Zusammensetzung des Reaktionsgemisches und die Charakterisierung der entsprechenden Copolyimide sind der Tabelle zu entnehmen.

Das in den Beispielen 3 bis 8 eingesetzte TDI bestand zu 80 % aus 2,4- und zu 20 % aus 2,6-Isomerem. Das im Beispiel 2 verwendete TDI wies eine Zusammensetzung von 70 % 2,4- und 30 % 2,6-Isomerem auf.

| Beispiel Nr. | Zusammensetzung | | | | Inh. Visk.[1] (ml/g) | $Tg^2$ (°C) |
|---|---|---|---|---|---|---|
| | Dianhydrid g(mol) | Diisocyanat g (mol) | NaOMe g (mol) | DMF g | | |
| 2 | BTDA 128,9 (0,4)<br>PMDA 21,8 (0,1) | TDI 87,1 (0,5) | 0,2 (0,0037) | 581 | 34 | 350 |
| 3 | BTDA 112,8 (0,35)<br>PMDA 32,7 (0,15) | TDI 87,1 (0,5) | 0,2 (0,0037) | 566 | 39 | 360 |
| 4 | BTDA 96,7 (0,3)<br>PMDA 43,6 (0,2) | TDI 87,1 (0,5) | 0,2 (0,0037) | 581 | 43 | 368 |
| 5 | BTDA 145 (0,45)<br>PMDA 10,9 (0,05) | TDI 69,6 (0,4)<br>MDI 25 (0,1) | 0,2 (0,0037) | 620 | 40 | 330 |
| 6 | BTDA 128,9 (0,4)<br>PMDA 21,8 (0,1) | TDI 69,6 (0,4)<br>MDI 25 (0,1) | 0,2 (0,0037) | 604 | 46 | 339 |
| 7 | BTDA 112,8 (0,35)<br>PMDA 32,7 (0,15) | TDI 69,6 (0,4)<br>MDI 25 (0,1) | 0,2 (0,0037) | 550 | 50 | 350 |
| 8 | BTDA 96,7 (0,3)<br>PMDA 43,6 (0,2) | TDI 69,6 (0,4)<br>MDI 25 (0,1) | 0,2 (0,0037) | 572 | 57 | 358 |

BTDA Benzophenon-3,3',4,4'-tetracarbonsäuredianhydrid
PMDA Pyromellithsäuredianhydrid
TDI Toluylendiisocyanat (2,4- und/oder 2,6-Isomeres)
MDI Methylenbis(phenylisocyanat)
NaOMe Natriummethylat
DMF Dimethylformamid
1 Inhärente Viskosität, c = 0,5 g/dl bei 25°C in DMF/1 % LiBr
2 Tg = Glasumwandlungspunkt bestimmt mittels Differential Scanning Calorimeter, Aufheizrate 20°C/min in $N_2$

**Patentansprüche**

**1.** Mischpolyimide bestehend aus Struktureinheiten der allgemeinen Formeln

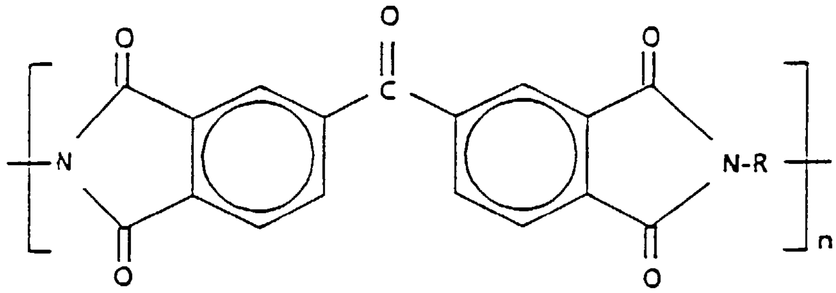

, (I)

und

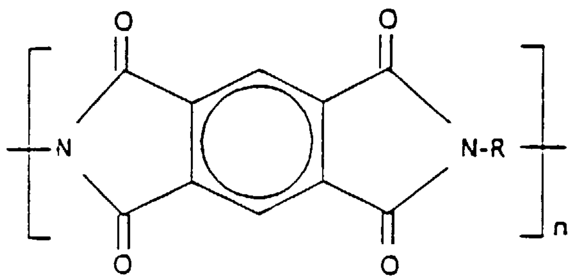

, (II)

worin n eine ganze Zahl größer 1 ist und R einen zweibindigen aromatischen Rest darstellt, wobei R ausschließlich für die beiden Gruppen

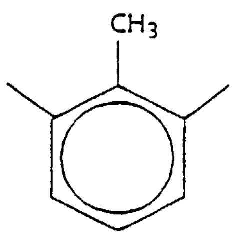

(IIIa) und

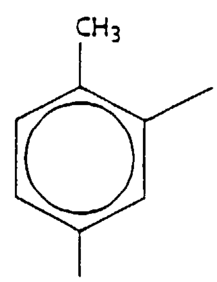

(IIIb)

und/oder die Gruppe

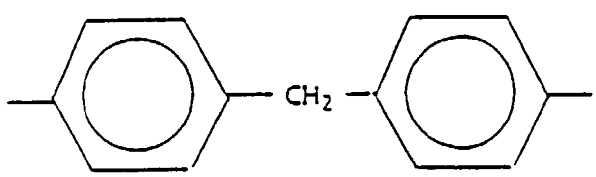

(IV)

steht, herstellbar unter Verwendung eines polaren aprotischen Lösungsmittels als Reaktionsmedium.

**2.** Mischpolyimide nach Anspruch 1, dadurch gekennzeichnet, daß das Molverhältnis der Struktureinheiten der allgemeinen Formel (I) zu den Struktureinheiten der allgemeinen Formel (II) im Bereich von 1 : 1 bis 99 : 1 liegt.

**3.** Mischpolyimide nach Anspruch 1 oder 2, dadurch gekennzeichnet, daß das Molverhältnis der Gruppen

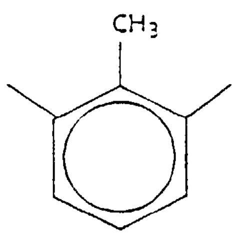

(IIIa) und

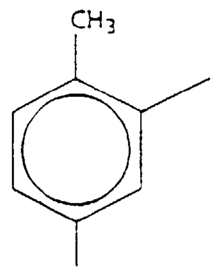

(IIIb)

zu der Gruppe

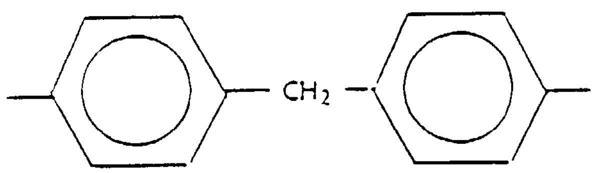

(IV)

mindestens 7 : 3 beträgt.

**4.** Verfahren zur Herstellung von Mischpolyimiden nach einem oder mehreren der Ansprüche 1 bis 3, gekennzeichnet durch die Kombination der Maßnahmen, daß

- eine Lösung eines intramolekularen Tetracarbonsäuredianhydrid-Gemisches, bestehend aus 50 bis 99 Mol% Benzophenon-3,3',4,4'-tetracarbonsäuredianhydrid und 50 bis 1 Mol% Pyromellithsäuredianhydrid, in einem polaren aprotischen Lösungsmittel als Reaktionsmedium, auf Temperaturen zwischen 60°C und 150°C, vorzugsweise zwischen 70°C und 100°C, erwärmt und mit
- einer insgesamt äquimolaren Menge von 2,4- und 2,6-Toluylendiisocyanat und/oder Methylenbis(phenylisocyanat) versetzt wird, wobei
- die Menge des Lösungsmittels mindestens so groß sein soll, daß zunächst sämtliche Reaktionsteilnehmer in Lösung sind.

**5.** Verfahren nach Anspruch 4, dadurch gekennzeichnet, daß der Lösung noch zusätzlich ein Alkalimetallhydroxid, -alkoholat, -carbonat oder Phospholen-, Phospholan- oder Phosphetanderivat als Polymerisationsbeschleuniger in einer Menge zwischen 0,0001 bis 0,1 Mol pro Mol Diisocyanat zugegeben wird.

**6.** Verfahren nach Anspruch 4, dadurch gekennzeichnet, daß statt des Toluylendiisocyanates und gegebenenfalls des Methylenbis(phenylisocyanates) 2,4- und 2,6-Toluylendiamin bzw. Methylenbis(phenylamin) eingesetzt werden.

## Claims

**1.** Mixed polyimides consisting of structural units of the general formulae

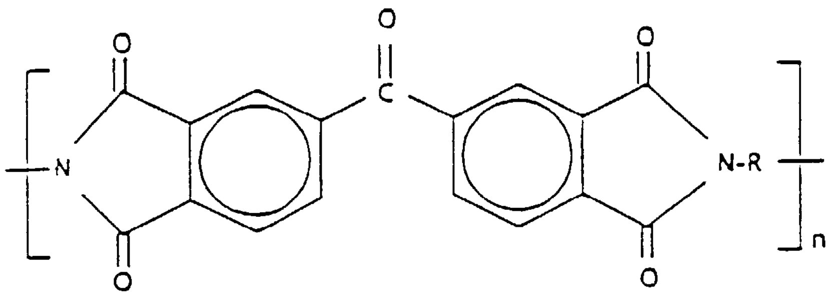

, (I)

and

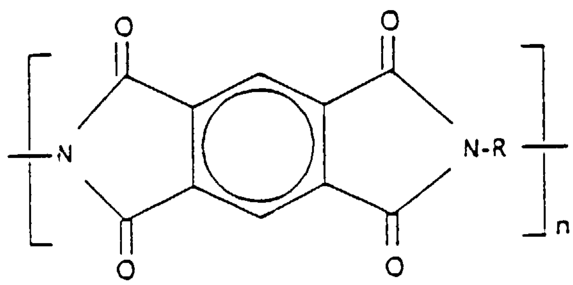

, (II)

wherein n is an integer larger than 1 and R represents a two-bond aromatic residue, R exclusively representing the two groups

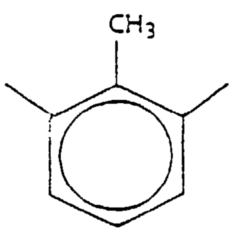

(IIIa) and

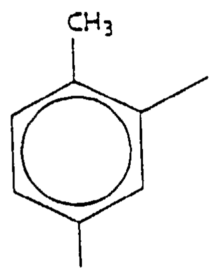

(IIIb)

and/or the group

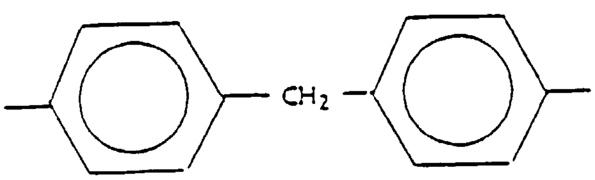

(IV)

and capable of being produced by using a polar aprotic solvent as a reaction medium.

**2.** Mixed polyimides according to claim 1, characterized in that the molar ratio of the structural units of the general formula (I) to the structural units of the general formula (II) ranges between 1:1 and 99:1.

**3.** Mixed polyimides according to claim 1 or 2, characterized in that the molar ratio of the groups

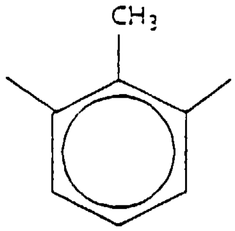 (IIIa) and 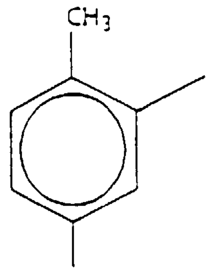 (IIIb)

to the group

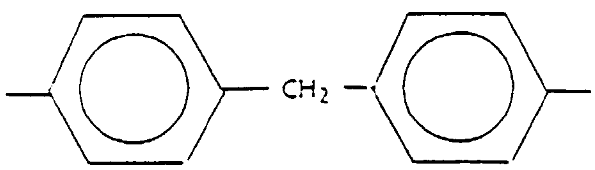 (IV)

amounts to at least 7:3.

**4.** A process for producing mixed polyimides according to one or several of claims 1 to 3, characterized by the combination of the measures that

- a solution of an intramolecular tetracarboxylic acid dianhydride mixture comprised of 50 to 99 % by mol of benzophenone-3,3',4,4'-tetracarboxylic acid dianhydride and 50 to 1 % by mol of pyromellithic acid dianhydride is heated to temperatures of between 60°C and 150°C, preferably between 70°C and 100°C, in a polar aprotic solvent as the reaction medium and
- is mixed with an altogether equimolar amount of 2,4- and 2,6-toluylenediisocyanate and/or methylen-bis(phenylisocyanate), wherein
- the amount of solvent is to be at least such that initially all of the reaction partners are dissolved.

**5.** A process according to claim 4, characterized in that an alkali metal hydroxide, alcoholate, carbonate or a phospholene, phospholane or phosphetane derivative is additionally added to the solution as a polymerization accelerator in an amount of between 0.0001 and 0.1 mol per mol of diisocyanate.

**6.** A process according to claim 4, characterized in that 2,4- and 2,6-toluylenediamine and methylen-bis(phenylamine), respectively, are used instead of toluylenediisocyanate and optionally methylene-bis(phenylisocyanate).

**Revendications**

**1.** Polyimides mixtes constitués d'unités structurelles des formules générales

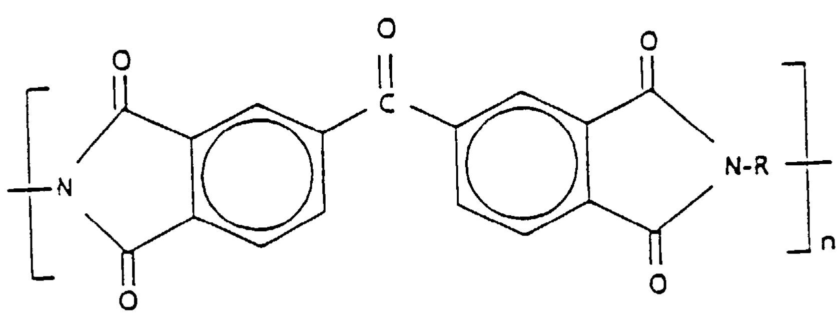 , (I)

et

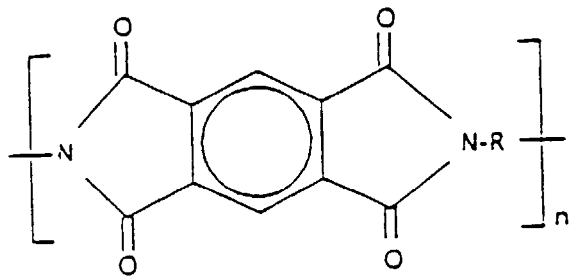

, (II)

dans lesquelles n est un nombre entier plus grand que 1 et R est un résidu aromatique à deux liaisons, R représentant exlusivement les deux groupes

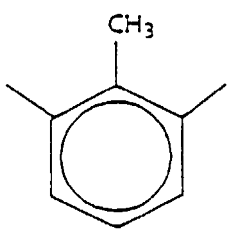

(IIIa) et

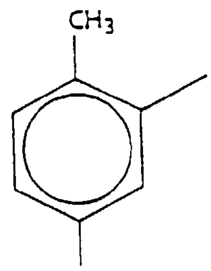

(IIIb)

et/ou le groupe

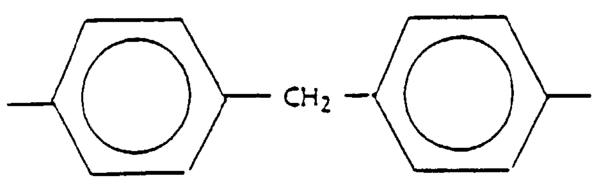

(IV)

polyimides mixtes qui sont susceptibles d'être préparés en utilisant un solvant aprotique polaire en tant que milieu de réaction.

**2.** Polyimides mixtes selon la revendication 1, caractérisés en ce que le rapport molaire des unités structurelles de la formule générale (I) aux unités structurelles de la formule générale (II) varie de 1 : 1 à 99 : 1.

**3.** Polyimides mixtes selon la revendication 1 ou 2, caractérisés en ce que le rapport molaire des groupes

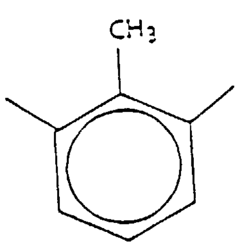

(IIIa) et

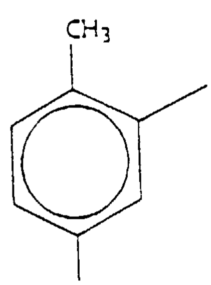

(IIIb)

au groupe

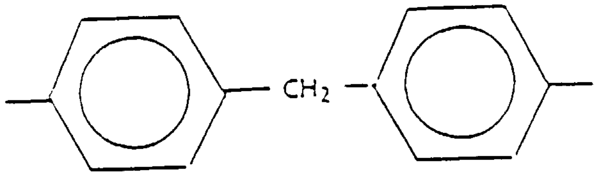

(IV)

est au moins 7 : 3.

**4.** Procédé pour la préparation des polyimides mixtes selon l'une ou plusieurs des revendications 1 à 3, caractérisé par la combinaison des mesures que

- une solution d'un mélange intramoléculaire d'un dianhydride d'acide tetracarboxylique constitué de 50 à 99 % en mole de dianhydride d'acide tetracarboxylique de benzophenone-3,3',4,4' et 50 à 1 % en mole de dianhydride d'acide pyromellique est chauffée à des températures entre 60°C et 150°C, de préférence entre 70°C et 100°C, dans un solvant aprotique polaire en tant que milieu de réaction, et
- est melangée avec une quantité équimolaire au total, de 2,4- et 2,6-toluylène-diisocyanate et/ou methylène-bis(phénylisocyanate), cependant que
- la quantité du solvant doit être au moins si grande que, tout d'abord, tous les partenaires réactionnels se trouvent en solution.

**5.** Procédé selon la revendication 4, caractérisé en ce qu'un hydroxide, alcoolate, carbonate d'un métal alkalin ou un dérivé de phospholène, phospholane ou phosphétane est, de plus, ajouté à la solution en une quantité variant de 0,0001 à 0,1 mole par mole de diisocyanate en tant qu'accélérateur de polymerisation.

**6.** Procédé selon la revendication 4, caractérisé en ce que 2,4- et 2,6-toluylènediamine et/ou methylène-bis(phénylisocyanate) sont utilisés au lieu du toluylènediisocyanate et, le cas échéant, du methylène-bis(phénylisocyanate).